# EUROPÄISCHE PATENTSCHRIFT

(11) **EP 1 150 419 B1**
(45) Veröffentlichungstag und Bekanntmachung des Hinweises auf die Patenterteilung: **22.09.2004**
(21) Anmeldenummer: 01108709.5
(22) Anmeldetag: 06.04.2001
(51) Int. Cl.: H02M 5/257

(54) **Verfahren zum Betrieb von Leistungsstellern und Schaltungsanordnung zur Durchführung des Verfahrens**
Method for operation of power controllers and circuit for carrying out of the method
Procédé de fonctionnement des contrôleurs de puissance et circuit pour la mise en oeuvre du procédé

(30) Priorität: 28.04.2000 DE 10020865
(43) Veröffentlichungstag der Anmeldung: 31.10.2001
(73) Patentinhaber: AEG SVS Power Supply Systems GmbH, 59581 Warstein-Belecke (DE)
(72) Erfinder: Vollmar, Wilfried, 59494 Soest (DE)
(74) Vertreter: Harazim, Eugen, Dipl.-Phys.

(56) Entgegenhaltungen:
- DE-A- 19 728 333
- DE-C- 4 437 966
- FR-A- 2 569 317
- FR-A- 2 757 708

## Beschreibung

Die vorliegende Erfindung bezieht sich auf ein Verfahren zum Betrieb parallel geschalteter Leistungssteller an einem Wechselstromnetz, die zur Leistungssteuerung innerhalb von Taktperioden mit festgelegten Zykluszeiten von mehreren Wechselstromperioden für vorgebbare Einschaltzeiten eingeschaltet werden, wobei die Einschaltung der einzelnen Leistungssteller synchronisierbar ist zur Vergleichmäßigung des entnommenen Netzstroms. Eine Schaltungsanordnung mit mindestens zwei Leistungsstellern, die parallel an ein Wechselstromnetz anschließbar sind und an die Verbraucher anschließbar sind, ist ebenfalls Gegenstand der Erfindung.

Zur Leistungssteuerung von Wechselstromverbrauchern ist es bekannt, Verbraucher über entsprechende Leistungssteller periodisch ans Netz zu schalten, wobei sich durch das Verhältnis der Durchschalt- und Sperrzeiten im zeitlichen Mittel die Leistung einstellen läßt.

Im Stand der Technik ist aus der DE 34 30 786 C2 bereits ein derartiges Verfahren bekannt, bei dem während der Durchschaltzeiten, d. h. der Einschaltzeiten der Leistungssteller, jeweils Schwingungspakete aus mehreren vollen Netzperioden durchgeschaltet werden. In dieser Druckschrift wird jedoch zur Synchronisierung mehrerer Leistungssteller eine variable Taktfrequenz, d. h. die Einschaltung innerhalb von Taktperioden mit variablen Zykluszeiten vorgeschlagen. Dieses in der Praxis als "Synchrotakt" bekannte Verfahren ist jedoch nicht zuletzt wegen der variablen Zykluszeiten mit einem nicht unerheblichen Aufwand verbunden. Diese Lösung ist daher für einfache Steuerungsaufgaben nicht wirtschaftlich.

Aus der DE 44 37 966 C1 ergibt sich ebenfalls ein Verfahren zum Betrieb von parallel geschalteten Leistungsstellern, bei dem im Unterschied zu dem vorgenannten Stand der Technik die Zykluszeiten der Taktperioden festgelegt sind. Die Leistungseinstellung erfolgt jedoch ebenfalls dadurch, daß die Leistungssteller innerhalb dieser Taktperioden jeweils zum Durchlass von unterschiedlich langen, mehrere Wechselstrom-Vollperioden umfassenden Schwingungspaketen durchgeschaltet werden. Dabei wird pro Taktperiode und Leistungssteller jeweils ein Schwingungspaket abgegeben, dessen Länge im Verhältnis zur Taktlänge im Effektivwert der abgegebenen Leistung im zeitlichen Mittel entspricht. Für den Betrieb mehrerer Leistungssteller parallel an einem Wechselstromnetz ist dieses Verfahren jedoch ebenfalls relativ aufwendig. Zur Vergleichmäßigung der Netzbelastung, d. h. zur zeitlichen Vergleichmäßigung des entnommenen Netzstroms über den Zeitraum einer Taktperiode, müssen die Einschaltzeiten, die den durchgelassenen Schwingungspaketen entsprechen, so über die Taktperiode zeitlich verteilt werden, daß durch Überlagerungen keine unerwünschten Belastungsspitzen entstehen können. Die zur Umsetzung derartiger Steueralgorithmen erforderlichen Steuerschaltungen sind angesichts der variablen Länge der jeweiligen Schwingungspakte relativ aufwendig und daher für einfachere Stellanwendungen nicht wirtschaftlich.

Zusätzlich kommt hinzu, daß bei den vorgenannten Steuerungsverfahren jeweils Schwingungspakete aus einer Anzahl voller Netzperioden gebildet werden. Im zeitlichen Mittel können dadurch insbesondere mit dem Synchrotakt-Verfahren gemäß der vorgenannten DE 34 30 786 C2 hinreichend genaue Leistungsvorgaben erfolgen. Problematisch ist jedoch die Ansteuerung von Verbrauchern mit hoher Stellempfindlichkeit, da relativ große und damit unerwünschte Hystereseschwankungen auftreten können. Dies ist beispielsweise bei Infrarot-Heizstrahlern der Fall, die relativ schnell ansprechen und sich infolgedessen bereits innerhalb einer Netzperiode so stark aufheizen, daß über eine Taktperiode Temperaturschwankungen in einer Größenordnung auftreten können, die für bestimmte Anwendungen nicht akzeptabel ist.

Angesichts der vorgenannten Problematik bestand in der Vergangenheit eine Aufgabe darin, ein Verfahren zum Betrieb von Leistungsstellern anzugeben, welches sich mit geringerem Aufwand realisieren läßt als das vorgenannte Synchrotakt- und das ASM-Verfahren, wobei eine gleichmäßigere Einstellung mit geringeren Hystereseffekten ermöglicht werden soll.

Zur Lösung dieses Problems schlägt die Druckschrift DE 197 28 333 A1 ein Verfahren der eingangs genannten Art vor, bei dem die Leistungssteller zumindest teilweise gemäß einer vorgegebenen zeitlichen Abfolge von vereinzelten, zeitlich beabstandeten Netzhalbwellen eingeschaltet werden.

Bei dem Verfahren gemäß der Druckschrift werden feste Taktperioden vorgegeben, deren Zyklusdauer von der Anzahl der parallel geschalteten Leistungssteller abhängig gemacht wird. Die Besonderheit des erfindungsgemäßen Verfahrens gegenüber dem vorbekannten Stand der Technik besteht nun darin, daß die relative Einschaltdauer des Leistungsstellers innerhalb einer Taktperiode, welche der relativen Leistungseinstellung entspricht, nicht wie bislang in Form eines einzigen Schwingungspakets mit variabler Länge erfolgt, sondern die Gesamt-Einschaltzeit innerhalb einer Taktperiode durch Muster von jeweils einzeln durchgeschalteten Halbwellen vorgegeben wird. Konkret bedeutet dies, daß beispielsweise bei einer Taktperiode mit einer Länge von 16 Netzperioden, das entspricht 32 Netzhalbwellen, zur Einstellung von 25% Leistung ein Leistungssteller im Stand der Technik für die Dauer von 4 Netzvollwellen durchgesteuert und anschließend für die Dauer von 12 Netzvollwellen gesperrt wird. Im Unterschied dazu können bei dem bekannten Verfahren insgesamt 8 einzelne Halbwellen durchgeschaltet werden, zwischen denen sich jeweils eine Sperrzeit von im Mittel 3 Halbwellen befindet. Für abweichende Leistungseinstellungen können entsprechend unterschiedliche Muster von Halbwellen vorgegeben werden, die sich durch größere Sperrzeiten zwischen den einzelnen Halbwellen für kleinere eingestellte Leistungen auszeichnen, oder umgekehrt durch kleinere oder wegfallende Sperrzeiten für höhere Leistungsabgaben.

Ein besonderer Vorteil der zeitlich auf einzelne Netzhalbwellen verteilten Durchschaltzeit ist, daß unerwünschte Schwankungen um den eingestellten Sollwert der Stellgröße auch bei Systemen mit hoher Ansprechgeschwindigkeit relativ gering gehalten werden können, beispielsweise den oben erwähnten Infrarot-Heizstrahlern mit kleiner thermischer Zeitkonstante.

Bei der Realisierung des Verfahrens ist es weiterhin vorteilhaft, daß für eine Anordnung von Leistungsstellern jeweils nur einmal die Zykluszeit der Taktperioden und die darin einstellbaren Anordnungen von Halbwellen definiert werden müssen, welche jeweils unterschiedlichen Durchschaltzeiten bzw. Leistungsvorgaben entsprechen. Aufwendige Einrichtungen zur zeitlichen Verschiebung der Einschaltzeiten, wie beim Syncrotakt- oder ASM-Verfahren gemäß der obengenannten DE 34 30 786 C2 bzw.
DE 44 37 966 C1, sind bei dem erfindungsgemäßen Verfahren nicht erforderlich. Dadurch kann sowohl der konstruktive Aufbau der Leistungssteller als auch die erforderliche Steuerungssoftware deutlich einfacher strukturiert sein. Dadurch kann das erfindungsgemäße Verfahren wegen des geringeren erforderlichen Aufwands auch bei einfachen Stellaufgaben wirtschaftlich eingesetzt werden.

Die positiven Betriebseigenschaften des Verfahrens ergeben sich daraus, daß die Stromentnahme für einzelne Netzhalbwellen im Netz relativ gut ausgeglichen wird. Damit wird zum einen die Forderung erfüllt, das Netz nicht mit unerwünschten Gleichstromanteilen zu belasten.

Ein Problem beim Betrieb parallel geschalteter Leistungssteller, wie er z.B. aus der Druckschrift DE 197 28 333 A1 bekannt ist, ist jedoch, dass es beim gleichzeitigen Beginn der Taktperioden der Leistungssteller zu unerwünschten punktuellen Spitzenbelastungen führen kommen kann.

Die Vorteile bei dem erfindungsgemäßen Verfahren ergeben sich daraus, daß die Synchronisierung mehrerer aufeinanderfolgender Leistungssteller mit besonders geringem Aufwand durchführbar ist, ohne das es dabei zu unerwünschten Belastungsspitzen im Netz kommen würde. Im einzelnen ist hierzu lediglich vorzusehen, daß die Taktperiode eines auf einen vorangehenden Leistungssteller (Vorsteller) nachfolgenden Leistungsstellers (Folgesteller) im Anschluß an die erste Netzhalbwelle einer Einschaltzeit des vorangehenden Leistungsstellers gestartet wird.

Darüber hinaus wird durch die gleichmäßigere Verteilung der Einschaltzeiten für einzelne Leistungssteller eine hohe punktuelle Spitzenbelastung, die im Stand der Technik durch ungünstige Überlagerung mehrerer längerer Einschaltintervalle entstehen kann, weitestgehend vermieden. Dadurch ermöglicht das erfindungsgemäße Verfahren eine besonders netzrückwirkungsarme Leistungseinstellung.

Die zeitliche Abfolge für die Einschaltzeiten der Leistungssteller innerhalb einer Taktperiode umfaßt vorzugsweise die gleiche Anzahl von einzelnen Halbwellen jeweils unterschiedlicher Polarität. Dies kommt einer gleichmäßigen Netzbelastung besonders zugute. Daß dabei im Einzelfall die positiven und negativen Halbwellen zeitlich nicht völlig symmetrisch bzw. gleichmäßig innerhalb einer Taktperiode gesetzt werden können, beeinträchtigt die grundlegenden Vorteile des erfindungsgemäßen Verfahrens praktisch nicht. Bevorzugt werden die Halbwellen mit abwechselnder Polarität aufeinander folgend durchgeschaltet.

Vorzugsweise beginnt dabei die Taktperiode des nachfolgenden Leistungsstellers mit einer Halbwelle umgekehrter Polarität bezüglich der letzten Halbwelle des vorangehenden Stellers. Dadurch, daß der Folgesteller innerhalb der Sperrzeit des Vorstellers durchgeschaltet wird, wird praktisch eine zeitliche Staffelung durchgeführt, bei welcher zunächst die Sperrzeiten des Gesamtsystems aus mehreren Leistungsstellern reduziert werden. Die Koordinierung der Einschaltzeitpunkte der einzelnen Steller untereinander kann einfach dadurch erfolgen, daß der Folgesteller getriggert wird, sobald die erste Sperrzeit des Vorstellers einsetzt. Auf diese Weise kann eine Mehrzahl von Leistungsstellern kaskadiert werden, wobei ein Leistungssteller jeweils durch seinen Vorsteller getriggert, d. h. gestartet wird, während er zugleich selbst als Vorsteller für den nachfolgenden Leistungssteller fungiert. Dazu wird lediglich sein Signalausgang mit dem Signaleingang des nachfolgenden Stellers verbunden. Dadurch wird ein dezentraler, modulartiger Aufbau eines Systems aus einer Mehrzahl von Leistungsstellern realisiert, welches keine komplexe, übergeordnete Hard- bzw. Softwaresteuerung benötigt und deswegen besonders flexibel für unterschiedliche Systeme anpaßbar ist. Bei alledem ist der konstruktive Aufwand verglichen mit dem Stand der Technik erheblich geringer, so daß der konstruktive Aufwand selbst für einfachere Stellaufgaben wirtschaftlich vertretbar ist.

Die Zykluslänge einer Taktperiode kann bei dem erfindungsgemäßen Verfahren anhand des Produkts aus der Anzahl der Leistungssteller multipliziert mit der Länge der Netzperiode, also einer Wechselstrom-Vollwelle abgeschätzt werden. Die typische Gesamtzykluslänge sollte bei dem erfindungsgemäßen Verfahren dementsprechend zwischen 100 und 1.000 ms betragen. Im wesentlichen unabhängig von der tatsächlich gewählten Zykluslänge sorgt jedoch die erfindungsgemäße Verteilung der durchgeschalteten Halbwellen über die Dauer der Taktperiode dafür, daß selbst bei der Überlagerung einer Mehrzahl von Leistungsstellern, die jeweils in der weiter oben erläuterten Abfolge hinsichtlich ihrer Durchschalt- und Sperrzeiten gestaffelt werden, dafür, daß innerhalb einzelner Taktperioden keine größeren Schwankungen bezüglich der dem Netz entnommenen Leistung auftreten.

Eine Schaltungsanordnung zur Durchführung des erfindungsgemäßen Verfahrens mit mindestens zwei Leistungsstellern, die parallel an ein Wechselstromnetz anschließbar sind, und an denen Verbraucher anschließbar sind, sieht gemäß der Erfindung vor, daß von einem Leistungssteller vom Ausgang in zyklisch wiederholbaren Taktperioden gemäß einer vorgegebenen zeitlichen Abfolge vereinzelte, zeitlich beabstandete Netzhalbwellen durchschaltbar sind.

Die Besonderheit einer erfindungsgemäßen Schaltungsanordnung bezieht sich darauf, daß zum einen eine Vorgabe bezüglich der Länge der zyklisch wiederholbaren Taktperioden erfolgen kann und zum anderen eine Anzahl von erfindungsgemäßen Halbwellen-Mustern vorgebbar ist. Jedes dieser Muster definiert eine zeitliche Sequenz von Sperr- und Durchlaßzeiten innerhalb einer Taktperiode. Dadurch, daß innerhalb dieser Taktperiode eine begrenzte Anzahl von Netzhalbwellen vorhanden ist, ist ebenfalls eine begrenzte Anzahl von Leistungs- Schaltstufen möglich, die jeweils durch ein bestimmtes Muster definiert werden. Die Vorteile des erfindungsgemäßen Verfahrens kommen dabei insbesondere bei Leistungseinstellungen unter 50% zur Geltung, weil bis zu dieser relativen Leistungseinstellung prinzipiell noch ein Muster denkbar wäre, welches ausschließlich aus Netzhalbwellen besteht. Bei der Einstellung höherer relativer Leistungsabgabe ergeben sich zwar unter Umständen zusammenhängende Folgen von Netzhalbwellen. Dies steht jedoch den grundsätzlichen Vorteilen des erfindungsgemäßen Ansatzes nicht entgegen.

Bei einer Kombination von mehreren der erfindungsgemäßen Leistungssteller gemäß dem erfindungsgemäßen Verfahren ist es vorteilhaft, daß diese jeweils einen Eingang aufweisen, wobei dieser Eingang eines nachfolgenden Leistungsstellers (Folgesteller) jeweils an den Ausgang eines vorangehenden Leistungsstellers (Vorsteller) anschließbar ist. Der Eingang bildet jeweils einen Triggereingang, der im einzelnen so ausgestaltet ist, daß die Taktperiode eines Leistungsstellers gemäß dem vorgegebenen Muster getriggert, d. h. gestartet wird, wenn ein definierter Eingangszustand anliegt, beispielsweise das Ende einer Einschaltzeit des Vorstellers im Sinne der weiter oben erläuterten Kaskadierung mehrerer Steller.

Im folgenden wird das erfindungsgemäße Verfahren anhand zeichnerischer Darstellungen näher erläutert. Hierzu zeigen im einzelnen
- Fig. 1: U/t-Diagramme von erfindungsgemäßen Abfolgen von Netzhalbwellen;
- Fig. 2: ein erstes Beispiel für eine Überlagerung zweier gleichartiger Anordnungen gemäß Figur 1;
- Fig. 3: ein zweites Beispiel für eine Überlagerung zweier ungleicher Anordnungen gemäß Figur 1;
- Fig. 4: eine schematisch dargestellte Schaltungsanordnung gemäß der Erfindung.

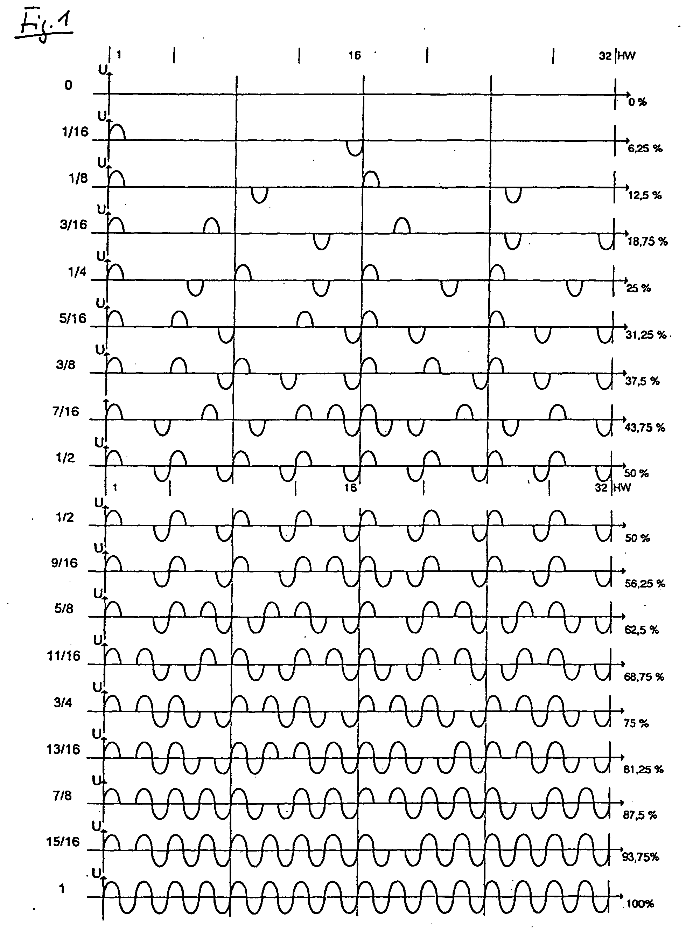

Fig. 1 zeigt ein U/t-Diagramm einer Taktperiode mit einer Zykluszeit von insgesamt 32 Netzhalbwellen, d. h. 16 Netzperioden, was bei einer Netzfrequenz von 50 Hz einer Zykluszeit von 320 ms entspricht.

In Fig. 1 sind insgesamt 17 erfindungsgemäße Muster angegeben, in denen die für verschiedene Leistungseinstellungen von einem Leistungssteller durchgeschalteten Netzhalbwellen eingezeichnet sind. Daraus ist deutlich erkennbar, daß in den Leistungseinstellungen von 0% bis 25% ausschließlich vereinzelte, zeitlich beabstandete Halbwellen relativ gleichmäßig über die Dauer der Taktperiode verteilt sind. In den Leistungsstufen von 31,25% bis 43,75% sind zumindest teilweise beabstandete, einzelne Halbwellen vorhanden. In den Leistungsstufen von 50% bis einschließlich 93,75% finden sich vereinzelte Halbwellen jeweils an den Enden der Zykluszeit.

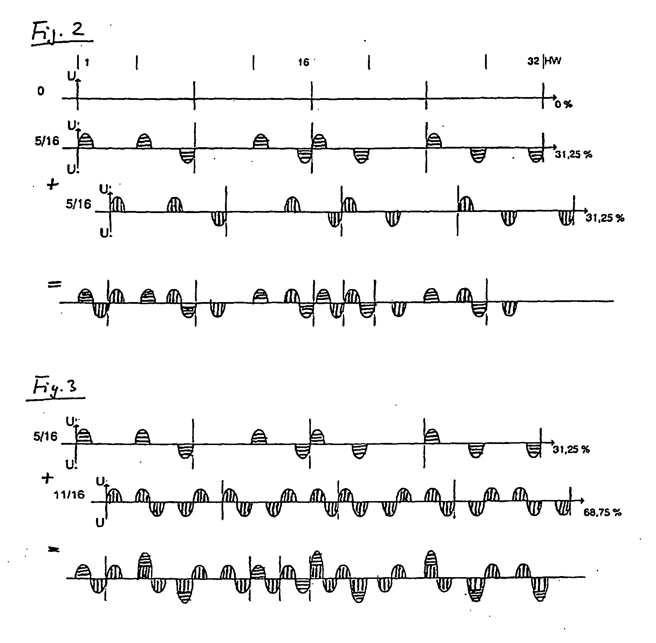

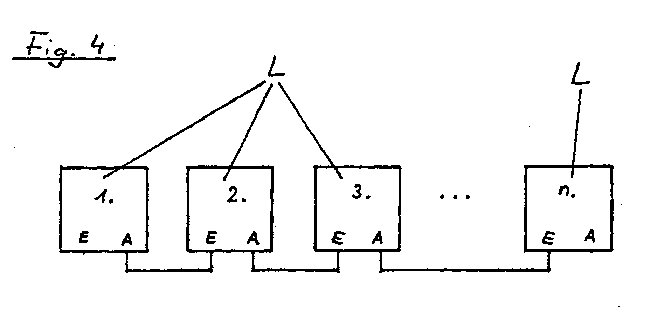

Die Vorteile beim Betrieb von zwei parallel geschalteten Leistungstellern nach dem erfindungsgemäßen Verfahren ergeben sich besonders deutlich aus Fig. 2 und Fig. 3. Darin sind in den ersten beiden ausgefüllten U/t-Diagrammen erfindungsgemäße Halbwellen-Muster gemäß Fig. 1 eingezeichnet. Dabei bezeichnen die in dem ersten Diagramm eingezeichneten, waagerecht schraffierten Halbwellen die Durchschaltzeiten eines ersten Leistungsstellers und entsprechend die in dem zweiten Diagramm senkrecht schraffierten, die Halbwellen eines zweiten Leistungsstellers.

Der Taktzyklus des jeweils zweiten Leistungsstellers wird nach dem Ende der ersten Einschaltzeit des ersten Leistungsstellers um eine Netzperiode verzögert gestartet. Dadurch ergibt sich in der Summe eine Netzbelastung gemäß dem aufsummierten Muster, wie es in dem jeweils letzten Diagramm eingezeichnet ist.

In Fig. 3 ist besonders deutlich erkennbar, daß die Überlagerung zweier auf gleiche Leistung von jeweils 31,25% eingestellter Leistungssteller ein Summenmuster von insgesamt 62,5% Netzbelastung ergibt, welches ausschließlich Netzhalbwellen mit durchgehend gleicher Amplitude aufweist.

In Fig. 3 sind zwei ungleiche Einzelleistungen von 31,25% und 68,75% addiert. Bis auf wenige, in der Amplitude verdoppelte Halbwellen ergibt sich im Mittel über die Dauer der Taktperiode eine relativ gleichmäßige Netzbelastung. Je mehr Geräte synchronisiert werden, um so gleichmäßiger wird die Netzbelastung.

Die Verschaltung einer Anzahl jeweils gleichartig aufgebauter Leistungsteller L ergibt sich aus Fig. 4. Der Signalausgang A eines vorangehenden Stellers L ist darin jeweils mit einem Signaleingang E eines nachfolgenden Stellers verbunden. Auf diese Weise kann eine beliebige Anzahl von Leistungsstellern von 1 bis n miteinander gekoppelt werden, ohne das eine zusätzliche Zentralsteuerung oder dergleichen notwendig ist. Die in den Leistungsstellern L enthaltene Steuerlogik startet eine Taktperiode jeweils um eine Netzperiode versetzt nach dem Beginn der Sperrzeit eines vorangehenden Stellers, so daß sich Überlagerungen ergeben, wie beispielsweise in Fig. 2 oder Fig. 3. dargestellt. Die Vorteile des Verfahrens und der dargestellten Schaltungsanordnung sind im wesentlichen bereits erläutert worden.

## Patentansprüche

1. Verfahren zum Betrieb parallel geschalteter Leistungssteller an einem Wechselstromnetz, die zur Leistungssteuerung innerhalb von Taktperioden mit festlegten Zykluszeiten von mehreren Wechselstromperioden für vorgebbare Einschaltzeiten eingeschaltet werden, wobei die Einschaltung der einzelnen Leistungssteller synchronisierbar ist zur Vergleichmäßigung des entnommenen Netzstroms, wobei die Leistungssteller (L) zumindest teilweise gemäß einer vorgegebenen zeitlichen Abfolge von vereinzelten, zeitlich beabstandeten Netzhalbwellen eingeschaltet werden, **dadurch gekennzeichnet, dass** die Taktperiode eines auf einen vorangehenden Leistungssteller nachfolgenden Leistungsstellers im Anschluss an die erste Netzhalbwelle oder Netzperiode der Einschaltzeit des vorangehenden Leistungstellers gestartet wird.

2. Verfahren nach Anspruch 1, **dadurch gekennzeichnet, dass** die zeitliche Abfolge innerhalb einer Taktperiode die gleiche Anzahl von einzelnen Halbwellen jeweils unterschiedlicher Polarität umfasst.

3. Verfahren nach Anspruch 1 oder 2, **dadurch gekennzeichnet, dass** im Mittel auf eine einzelne Halbwelle eine einzelne Halbwelle umgekehrter Polarität folgt.

4. Verfahren nach einem der Ansprüche 1 bis 3, **dadurch gekennzeichnet, dass** eine in den vorangehenden Leistungsstellern enthaltene Steuerlogik die Taktperiode des nachfolgenden Leistungsstellers um eine Netzperiode versetzt nach dem Beginn einer Sperrzeit des vorangehenden Stellers startet.

5. Verfahren nach einem der Ansprüche 1 bis 4, **dadurch gekennzeichnet, dass** die Taktperiode des nachfolgenden Leistungstellers mit einer Halbwelle umgekehrter Polarität bezüglich der letzten Halbwelle des vorangehenden Stellers beginnt.

6. Verfahren nach einem der Ansprüche 1 bis 4, **dadurch gekennzeichnet, dass** die Zykluslänge einer Taktperiode zumindest dem Produkt aus der Anzahl der Leistungssteller und der Netzperiode entspricht.

7. Schaltungsanordnung zur Durchführung des Verfahrens nach Ansprüchen 1 bis 5, mit mindestens zwei Leistungsstellern, die parallel an ein Wechselstromnetz anschließbar sind, und an denen Verbraucher anschließbar sind, wobei von einem Leistungssteller in zyklisch wiederholbaren Taktperioden gemäß einer vorgebbaren zeitlichen Abfolge vereinzelte, zeitlich beabstandete Netzhalbwellen durch schaltbar sind, **dadurch gekennzeichnet, dass** die Leistungssteller jeweils einen Signaleingang aufweisen, wobei dieser Signaleingang eines nachfolgenden Leistungsstellers jeweils an den Signalausgang eines vorangehenden Leistungsstellers anschließbar ist.

8. Schaltungsanordnung nach Anspruch 6, **dadurch gekennzeichnet, dass** die Leistungssteller jeweils eine Steuerlogik aufweist.

## Claims

1. Method for operating parallel-connected power controllers on an AC power supply system, which are switched on for predeterminable switch-on times for the purpose of controlling the power within clock periods having specific cycle times of two or more AC periods, it being possible for the individual power controllers to be switched on synchronously for the purpose of making the drawn rated current uniform, the power controllers (L) being switched on at least partly according to a predetermined time sequence of individual, temporally spaced-apart system half-cycles, **characterized in that** the clock period of a power controller following a preceding power controller is started after the first system half-cycle or system period of the switch-on time of the preceding power controller.

2. Method according to Claim 1, **characterized in that** the time sequence within a clock period has the same number of individual half-cycles, each having a different polarity.

3. Method according to Claim 1 or 2, **characterized in that**, on average, an individual half-cycle is followed by an individual, reverse-polarity half-cycle.

4. Method according to one of Claims 1 to 3, **characterized in that** control logic contained in the preceding power controllers starts the clock period of the following power controller, offset through one system period, after a blocking time of the preceding controller has begun.

5. Method according to one of Claims 1 to 4, **characterized in that** the clock period of the following power controller begins with a half-cycle of opposition polarity with respect to the last half-cycle of the preceding controller.

6. Method according to one of Claims 1 to 4, **characterized in that** the cycle length of a clock period corresponds at least to the product of the number of power controllers and the system period.

7. Circuit arrangement for carrying out the method according to Claims 1 to 5 having at least two power controllers, which can be connected in parallel to an AC power supply system, and may have loads connected to them, it being possible for individual, temporally spaced-apart system half-cycles to be connected by a power controller in clock periods, which can be repeated cyclically, according to a predeterminable time sequence, **characterized in that** the power controllers each have a signal input, it being possible for this signal input of a following power controller to in each case be connected to the signal output of a preceding power controller.

8. Circuit arrangement according to Claim 6, **characterized in that** the power controllers each have control logic.

## Revendications

1. Procédé pour faire fonctionner des éléments de commande de puissance branchés en parallèle sur un réseau de courant alternatif, lesquels sont activés en vue de contrôler la puissance à l'intérieur de périodes d'horloge avec des temps de cycles fixes de plusieurs périodes de courant alternatif pendant des temps d'activation pouvant être prédéfinis, l'activation des éléments de commande de puissance individuels étant synchronisable et destinée à homogénéiser le courant prélevé du réseau, les éléments de commande de puissance (L) étant activés au moins partiellement selon une chronologie prédéfinie de demi-ondes du réseau isolées et espacées dans le temps, **caractérisé en ce que** la période d'horloge d'un élément de commande de puissance qui suit un élément de commande de puissance précédent est démarrée à la fin de la première demi-onde de réseau ou période de réseau du temps d'activation de l'élément de commande de puissance précédent.

2. Procédé selon la revendication 1, **caractérisé en ce que** la chronologie à l'intérieur d'une période d'horloge comprend le même nombre de demi-ondes individuelles à chaque fois de polarité différente.

3. Procédé selon la revendication 1 ou 2, **caractérisé en ce qu'**en moyenne une demi-onde individuelle est suivie par une demi-onde individuelle de polarité inverse.

4. Procédé selon l'une des revendications 1 à 3, **caractérisé en ce qu'**une logique de commande contenue dans les éléments de commande de puissance précédents démarre la période d'horloge de l'élément de commande de puissance suivant décalée d'une période de réseau après le début d'un temps de blocage de l'élément de commande précédent.

5. Procédé selon l'une des revendications 1 à 4, **caractérisé en ce que** la période d'horloge de l'élément de commande suivant commence par une demi-onde de polarité inverse à la dernière demi-onde de l'élément de commande précédent.

6. Procédé selon l'une des revendications 1 à 4, **caractérisé en ce que** la longueur de cycle d'une période d'horloge correspond au moins au produit du nombre d'éléments de commande de puissance par le nombre de périodes de réseau.

7. Arrangement de circuit pour mettre en oeuvre le procédé selon les revendications 1 à 5, comprenant au moins deux éléments de commande de puissance qui peuvent être branchés en parallèle sur un réseau de courant alternatif et auxquels peuvent être branchés des appareillages, un élément de commande de puissance pouvant laisser passer des demi-ondes de réseau espacées dans le temps isolées dans des périodes d'horloge répétables de manière cyclique selon une chronologie pouvant être prédéfinie, **caractérisé en ce que** les éléments de commande de puissance présentent à chaque fois une entrée signal, cette entrée signal d'un élément de commande de puissance suivant pouvant à chaque fois être raccordée à la sortie signal d'un élément de commande de puissance précédent.

8. Arrangement de circuit selon la revendication 6, **caractérisé en ce que** l'élément de commande de puissance présente à chaque fois une logique de commande.
